# EUROPEAN PATENT APPLICATION

(11) **EP 2 816 493 A1**
(43) Date of publication of application: **24.12.2014**
(21) Application number: 14173084.6
(22) Date of filing: 19.06.2014
(51) Int. Cl.: G06F 17/30, G06F 17/24

(54) **Contents sharing service**

(30) Priority: 20.06.2013 KR 20130070877
(71) Applicant: Samsung Electronics Co., Ltd, Gyeonggi-do 443-742 (KR)
(72) Inventor: Kim, Kyung-Tae, Gyeonggi-do (KR); Jeon, Yong-Joon, Gyeonggi-do (KR); Kim, Yang-Wook, Gyeonggi-do (KR); Bae, Hye-Rim, Gyeonggi-do (KR); Lee, Sun-Kee, Gyeonggi-do (KR); Kang, Doo-Suk, Gyeonggi-do (KR)
(74) Representative: Nederlandsch Octrooibureau

(57) **Abstract**

A method and device for sharing content on an electronic device are provided. The electronic device includes a display and a processor., The processor is configured to display content on the display, display input of at least one of an image and text to the display, at least one of the image and the text being overlapped with at least a portion of the content, and transmit information representing the input along with information representing the content.

## Description

### TECHNICAL FIELD

The present disclosure relates to a method for displaying a content and an electronic device thereof.

### BACKGROUND

With the recent rapid development of an electronic technology, various electronic devices that may exchange information or data have been used. In general, such an electronic device includes a display unit and an input unit and may also support a web search function.

Such an electronic device may use a browser such as S browser, Tizen™ browser, Chrome™, Internet Explorer™, Netscape Navigator™, or Firefox™ to display content such as a web page. When displaying the web page, the electronic device may receive a document written with a mark-up language such as a Hyper Text Markup Language (HTML).

The above information is presented as background information only to assist with an understanding of the present disclosure. No determination has been made, and no assertion is made, as to whether any of the above might be applicable as prior art with regard to the present disclosure.

### SUMMARY

As described above, when the two images are synthesized by using the front and rear cameras, an electronic device synthesizes the images without considering perspective and warping of an object, and accordingly the images may be unnaturally synthesized.

Aspects of the present disclosure are to address at least the above-mentioned problems and/or disadvantages and to provide at least the advantages described below. Accordingly, an aspect of the present disclosure is to provide a device and method for sharing content including an object added by a user's gesture on an electronic device.

Another aspect of the present disclosure is to provide a device and method for generating object information on an object added to a content reproduction screen on an electronic device.

Another aspect of the present disclosure is to provide a device and method for representing the shape of an object added to content by using at least one of a dot, a line, and a plane and for using the representation of the shape of the object as object information, on an electronic device.

Another aspect of the present disclosure is to provide a device and method for reproducing and displaying an object added to a content reproduction screen by using object information when receiving content including the object information by an electronic device.

In accordance with an aspect of the present disclosure an electronic device for sharing content is provided. The electronic device includes a display, and a processor. The processor is configured to display content on the display, display input of at least one of an image and text to the display, at least one of the image and the text being overlapped with at least a portion of the content, and transmit information representing the input along with information representing the content.

In accordance with an aspect of the present disclosure a method of operating an electronic device is provided. The method includes displaying content on the display of an electronic device, displaying input of at least one of an image and/or text input to the electronic device, so that at least one of the image and/or the text is being overlapped with at least a portion of the content, and transmitting information representing the input along with information representing the content.

In accordance with an aspect of the present disclosure, an electronic device for sharing content is provided. The content sharing device includes a display, and a processor. The processor is configured to receive information representing content and object information representing at least one of an image and text to be displayed on the content, display content on the display, and display the at least one of the image and the text on the display, the at least one of the image and the text being overlapped with at least a portion of the content.

In accordance with another aspect of the present disclosure, a content sharing method is provided. The content sharing method includes receiving information representing content and object information representing at least one of an image and text to be displayed on the content, displaying content on the display, and displaying at least one of the image and the text on the display based on at least a portion of the object information, at least one of the image and the text being overlapped with at least a portion of the content.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device sharing content according to various embodiments of the present disclosure;
FIG. 2 is a flow chart of an operation of sharing content on an electronic device according to various embodiments of the present disclosure;
FIG. 3 is a flow chart of an operation of displaying received content on an electronic device according to various embodiments of the present disclosure;
FIGS. 4A, 4B, and 4C show a screen of generating object information on an electronic device according to various embodiments of the present disclosure;
FIGS. 5A and 5B show an operation of sharing content on an electronic device according to various embodiments of the present disclosure;
FIGS. 6A, 6B, and 6C show an operation of generating object information on an electronic device according to various embodiments of the present disclosure;
FIGS. 7A, 7B, 7C, 7D, and 7E show an operation of generating object information on an electronic device according to various embodiments of the present disclosure;
FIGS. 8A and 8B show a screen of displaying reproduced content on an electronic device according to various embodiments of the present disclosure;
FIGS. 9A and 9B show an operation of storing a content reproduction screen as a bookmark on an electronic device according to various embodiments of the present disclosure;
FIGS. 10A and 10B show an operation of reproducing an object added to content on an electronic device according to various embodiments of the present disclosure;
FIGS. 11A and 11B show another operation of reproducing an object added to content on an electronic device according to various embodiments of the present disclosure;
FIGS. 12A, 12B, and 12C show an operation of generating object information on an electronic device according to various embodiments of the present disclosure;
FIG. 13 shows an operation of sharing object information by using a server on an electronic device according to various embodiments of the present disclosure; and
FIG. 14 is a flow chart of an operation of sharing content on an electronic device according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to at least one of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

A touch screen widely used in an electronic device today may allow information to be input and displayed on one screen. An electronic device including such a touch screen may also support an object adding function that allows a text, a number, and/or a figure (hereinafter, referred to as an "object") to be added to displayed content by using an input unit such as a finger, a stylus pen, or an electronic pen. In general, such an object adding function may be performed by using a specific application such as a memo application or an image editing application.

For example, when an object is added to a web page (e.g., a Hyper Text Markup Language (HTML) document) by using a browser, it is possible to first convert a displayed web page into image data (e.g., a JPEG image) and store the image data. By using the object adding function of the image editing application, it is possible to add a text, a number, or a figure to stored image data.

In this case, it appears that the text, number or figure is added to the web page but it is actually added to the image data of the web page obtained through conversion. In this case, the object is stored as a portion of the image data through integration.

When the image data of the web page to which the object is added is played or reproduced on the electronic device as described above, or when the image data is transmitted to another electronic device and reproduced thereon, it is impossible to reproduce original web page (e.g., a web page to which the object is not added) (as long as the URL of the web page is directly input on a browser). In addition to the web page, a document, file and content written with various markup languages may also face similar situations. There is a need to improve the above-described content playback or reproduction function on the electronic device.

The following embodiments are described with respect to an electronic device including a touch screen. However, a person skilled in the art may easily understand that embodiments described in the present document may be properly applied to an electronic device or computing device having a separate input unit and a display excluding the touch screen, and they may also be properly applied to an electronic device having a plurality of displays or a plurality of input units. For example, the following examples may also be applied to an electronic device that performs a display operation by using a hologram and includes an input unit recognizing a gesture.

In various embodiments of the present disclosure, the electronic device may be a portable electronic device and a device such as a portable terminal, a mobile terminal, a media player, a tablet computer, a handheld computer, a laptop computer or a Personal Digital Assistant (PDA). Also, the electronic device may be any portable electronic device that includes a device combining two or more functions of such devices. According to another embodiment, the electronic device may also include any type of electronic device including a display and an input unit. For example, it is possible to include a desktop computer, a multi-function peripheral, a video game console, a digital camera, a Mobile Internet Device (MID) an Ultra Mobile PC (UMPC), a navigation device, a smart TV, a digital watch, and an MP3 player.

In the present document, the term "content" may generally refer to document data (e.g., HTML or a web page), image data (e.g., a picture or painting data), video data, or audio data but is not limited thereto.

In the following, a user's input on an electronic device according to various embodiments of the present disclosure is described. For example, a device and method for sharing content including an object added by a user's gesture is described. The object generally refers to information that may be generated by a key input or gesture generated on a touch screen by a user's finger or an electronic pen, and may include a figure, number or text.

In another embodiment, the object may be generated by using an input unit different from a touch screen, such as a keyboard, a mouse, or a touch pad. In addition, although the present disclosure describes that content or the object is displayed or represented, the terms "displayed" and "represented" may be interchangeably used generally.

According to various embodiments, an electronic device may generate object information that represents an object added to content according to a user's input (e.g., a gesture on a touch screen or a 3D gesture). The electronic device may display the shape of a 2D object added to content by using at least one of a dot, line and plane, and generate objection information corresponding thereto. The electronic device may display the shape of a 3D object added to content by using a plurality of planes (spaces) and also generate objection information corresponding thereto.

In various embodiments, the electronic device may use e.g., a graphic language that may represent graphic, to generate the object information. The graphic language may include a markup language such as a Vector Markup Language (VML), a Procedure Graphic Markup Language (PGML), or a Scalable Vector Graphics (SVG) and/or a markup language that may represent 3D graphic.

Such an electronic device may transmit and/or receive content which includes object information or to which object information is added. In addition, when reproducing or playing content, it is possible to display content to which the object is added, by using the object information.

According to various embodiments, even though the object information is stored with original content, the object information may be separated from the content for later playback or reproduction. If the object information is removed, it is possible to reproduce original content.

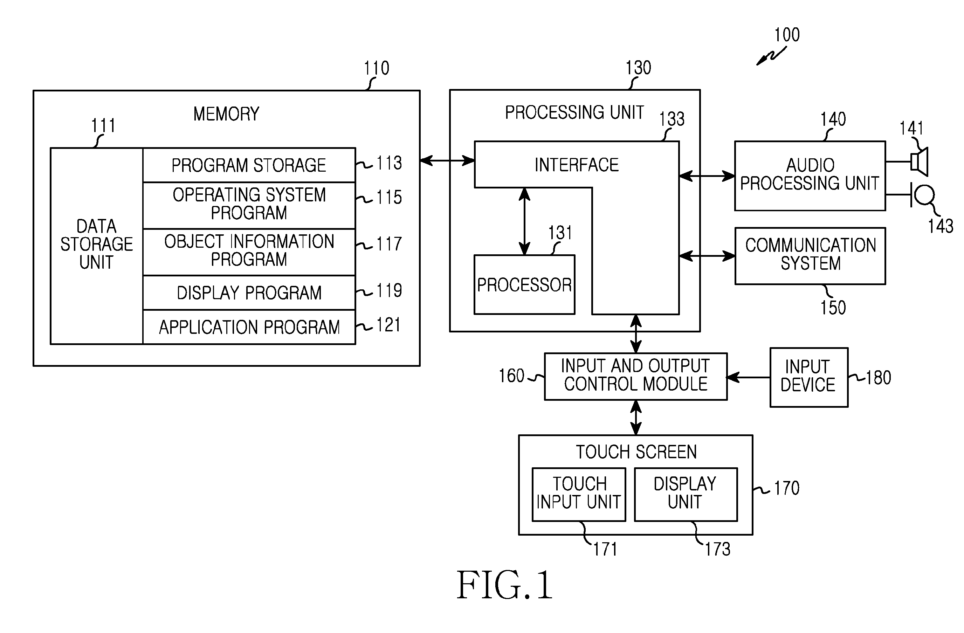

FIG. 1 is a block diagram of an electronic device sharing content according to various embodiments of the present disclosure.

As shown in FIG. 1, an electronic device 100 may include a memory 110, a processor unit 130, an audio processing unit 140, a communication system 150, an input and output control module 160, a touch screen 170, and an input device 180. At least one of such components may be in plurality. Each component is as follows.

The memory 110 may include a program storage unit 113 storing programs for controlling the operations of the electronic device 100, and a data storage unit 111 storing data generated during the execution of the programs. For example, the data storage unit 111 may store various types of updatable data for storage such as a phone number list, a sent message or a received message, and store content reproduced by the electronic device 100 or the object added to the content. In this example, the object may be generated by a key input or gesture generated on a touch screen by a user's finger or an electronic pen, and may include a figure, number or text.

According to various embodiments, the object stored in the data storage unit 111 may include object information that represents the shape of an object. In this example, the object information may be information that represents the result of a gesture to input a text or graphic (e.g., a dot, line or plane).

Also, the program storage unit 113 may include an Operation System (OS) program 115, an object information generation program 117, a display program 119 and at least one application program 121. In this example, the programs included in the program storage unit 113 indicate a set of instructions and may be represented by an instruction set.

The OS program 115 may include many software components that control general system operations. The control of such general system operations may mean memory management or control, storage hardware (device) control or management, or power control or management, for example. Such an OS program 115 may also perform a function of making the communication between many hardware pieces (devices) and program components (modules) smooth.

According to various embodiments, the object information generation program 117 may include many software components for generating object information that represents the shape of an added object on a content reproduction screen by a user's gesture. For example, the object information generation program 117 may include generated object information in content to which an object is added.

According to various embodiments, the object information generation program 117 may check and use path information on an input gesture as object information, in order to add an object to the content reproduction screen. The object information generation program 117 may check a component such as a dot, line or plane capable of representing an object added to the content reproduction screen and use the component as object information. The object information generation program 114 may check position information, color information, thickness information or font information on the object added to the content reproduction screen and use the information as object information.

In another embodiment, the object information generation program 117 may decrease the size of object information. According to an embodiment, the object information generation program 117 may generate object information in a state in which a gesture path for a range within which the shape of an object is not changed or a component representing an object is removed. The object information generation program 117 may compress collected object information and decrease the size of object information.

In another embodiment, the object information generation program 117 may adjust the size of a window to which an object may be added, and thus decrease the size of object information. The object information generation program 117 may provide direct information on text data without representing the text data by the shape of an object and thus adjust the size of object information.

In another embodiment, the object information generation program 117 may share information on an object through a specific server.

The object information generation program 117 may use a graphic language capable of representing graphic to generate the object information. The graphic language may include a markup language such as a VML, a PGML, or a SVG and/or a markup language that may represent 3D graphic.

The object information generation program 117 may use object information to reproduce an object from received content, when receiving content including the objection information.

The display program 119 may include many software components for providing and displaying graphics on the touch screen 170. The term "graphics" may be used as a meaning that includes texts, web pages, icons, digital images, videos, or animation.

The display program 119 may include many software components associated with a user interface.

The display program 119 may display a content reproduction screen and an object corresponding to the object information when reproducing content including the objection information.

The display program 119 may display a content reproduction screen and an added object so that they move, when sensing a gesture to move a screen after displaying the content reproduction screen.

The display program 119 may display a content reproduction screen and an added object so that the sizes of the content reproduction screen and the added object are adjusted to be suitable for a display ratio, when sensing a gesture to adjust the display ratio after displaying the content reproduction screen.

The display program 119 may display an object on a displayed content reproduction screen, when sensing a gesture to execute an added object after displaying the content reproduction screen. In this case, the display program 119 may use prestored meta data (e.g., information on when each dot, line or plane is inserted) on the shape of an object to sequentially display objects according to when the objects are added. For example, the display program 119 may display objects added to content in the form of animation according to when they are added. The display program 119 may display only a content reproduction screen, when sensing a gesture to hide added objects. The display program 119 may display a menu or button controlling the display of an object on a content reproduction screen. For example, when a menu or button to control the display of the object may be included in a browser, it is possible to sequentially display (animation-play) objects or hide (restore) displayed objects by using such a menu or button according to when objects are added. By using the menu or button, it is possible to delete the displayed objects from the content reproduction screen or copy the displayed objects and add them to another part of the content reproduction screen or to another content reproduction screen.

The application program 121 may include software components for at least one application program installed on the electronic device 100, programs to reproduce content, add an object to the content, and generate object information on an added object may also be included in the application program 121 as described above. This means that a function of including and sharing object information on an object added to content in content may be provided as one application.

The processor unit 130 may include at least one processor 131 or an interface 133. In this example, the processor 131 or interface 133 may be implemented as at least one integrated circuit or as a separate component.

The interface 133 may function as a memory interface for controlling an access to the memory 110 by the processor 131. The interface 133 may function as a peripheral device interface for controlling the connection between the input and output peripheral device of the electronic device 100 and the processor 131.

The processor 131 may use at least one software program to generate object information on an object added to a content reproduction screen and may use the object information to reproduce the object added to the content reproduction screen. In this case, the processor 131 may execute at least one program stored in the memory 110 to execute a function corresponding to that program. For example, the processor 131 may include a media processor that performs processing associated with content reproduction. Such a media processor may generate object information on the content reproduction screen, reproduce an object by using the object information, and display a reproduced object on the content reproduction screen.

For example, the function of adding or reproducing an object to or from content may be performed by using software such as a program stored in the memory 110 or hardware such as a processor.

The audio processing unit 140 may provide an audio interface between a user and the electronic device 100 through a speaker 141 and a microphone 143.

The communication system 150 may perform a communication function for voice communication or data communication of the electronic device 100. In this case, the communication system may be divided into a plurality of communication sub modules that support different communication networks. For example, the communication network may include a Global System for Mobile communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a wireless LAN, a Bluetooth network or Near Field Communication (NFC), transmit and receive content to be shared with other electronic devices and object information on an object added to the content.

The input and output control module 160 may provide an interface between an input and output device, such as a touch screen 170 or an input device 180, and the interface 133.

The touch screen 170 is an input and output device that displays or inputs information, and may include a touch input unit 171 and a display unit 173.

The touch input unit 171 may provide touch information sensed through a touch panel to the processor unit 130 through the input and output control module 160. In this case, the touch input unit 171 changes touch information to a command structure such as touch_down, touch_move or touch_up and provides the touch information to the processor unit 130. The processor unit 130 may generate input data for entering an input mode in which an object is added to the content reproduction screen, and a gesture of adding the object in the input mode.

The display unit 173 may display state information on the electronic device 100, user-input texts, moving pictures or still pictures. For example, the display unit 173 may display a content reproduction screen and an object generation operation or an object reproduction operation.

The input device 180 may provide input data generated by user selection to the processor unit 130 through the input and output control module 160. For example, the input device 180 may include only a button for controlling the electronic device 100. As another example, the input device 180 may include a key pad for obtaining input data from a user and generate input data for entering an input mode to add an object to the content reproduction screen and input data for adding an object in the input mode.

Although not shown, the electronic device 100 may further include components for providing additional functions including a broadcasting reception module for receiving broadcasting, a digital sound source reproduction module such as an MP3 module, a short-range wireless communication module for short-range wireless communication, an image sensor for acquiring image data, or a proximity sensor module for proximity sensor, and software for their operations.

An electronic device for sharing content as mentioned in the present disclosure may include various embodiments as will be described below.

According to various embodiments, the electronic device for content sharing includes a display and a processor. The processor may be configured to display content on the display, display an image and/or text input to the display so that the image and/or text is overlapped with at least a portion of the content, and transmit information representing the input or object information along with information representing the content.

The content may include at least one of a web page, digital document data, audio data, video data and image data. The information representing the input may include a markup language. According to various embodiments, the information representing the input may include scalable vector graphic information.

The information representing the content includes Uniform Resource Locator (URL) information representing the location of content, the information representing the input includes SVG information, and the processor may be configured to transmit the URL information and the SVG information together. The processor may add SVG information to the end of the URL information and transmit the URL information and the SVG information together. The URL information representing the location of the content may be an address that uses an HTTP protocol, or may be an address that uses various protocols. For example, the information representing the location of the content may be URL information provided from various servers such as a web server, a file server, an e-mail server, a sharing server, a gopher server, and a DB server.

When transmitting the information representing the input, the processor may compress and transmit a portion of coordinate information on the image and/or text displayed by the information representing the input or the coordinate information.

When transmitting the information representing the input, the processor may convert and transmit, the coordinate information on the image and/or text displayed by the information representing the input, into text data.

An electronic device for displaying content as mentioned in the present disclosure may include various embodiments as will be described below. According to various embodiments, the electronic device for displaying the content includes a display and a processor. The processor may receive the information representing the content and information representing an image and/or text to be displayed on the content, display content on the display and display the image and/or text on the display so that the image and/or text is overlapped with at least a portion of the content.

The processor may check the location of content on which the image and/or text is displaced, and display the image and/or text on the checked location of the content. When receiving content information on the same display method and information representing the image and/or text to be displayed on the content, the processor may display the image and/or text.

With a screen expansion and/or a screen movement for the content displayed on the display, the processor may also expand and/or move an image and/or text overlapped with the content. The processor may receive the information representing the image and/or text to be displayed on the content through a server.

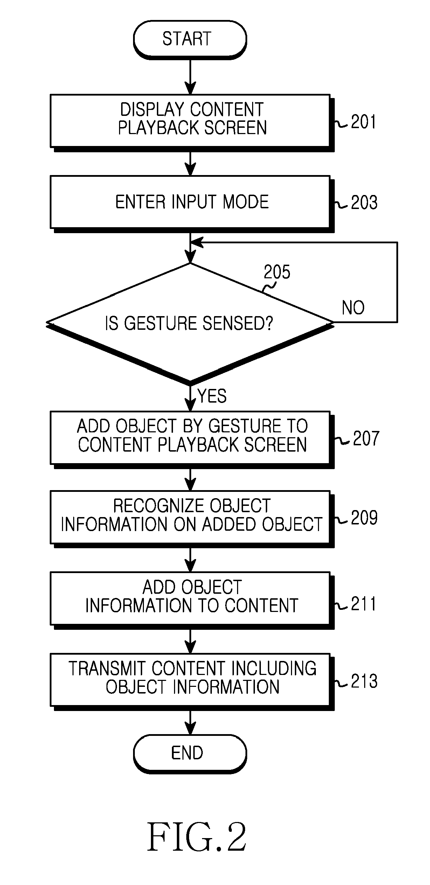

FIG. 2 is a flow chart of an operation of sharing content on an electronic device according to an embodiment of the present disclosure.

Referring to FIG. 2, the electronic device may support an input mode in which an object may be added to a displayed content reproduction screen. The content may include at least one of a web page, image data, video data, document data, and audio data. Various data that may be reproduced on the electronic device may be defined as content, in addition to the above-mentioned data.

The object may be generated through a key input or gesture generated on a touch screen by a user's finger or an electronic pen, and may include a figure, number or text. It is possible to enter an input mode to add an object, by using a predefined method. As an example, the electronic device may sense a menu input for entering an input mode, a button input on an electronic device, a predefined gesture input, or a button input on an input unit (e.g., an electronic pen) to enter the input mode.

Also, the above-mentioned gesture may mean forming a touch pattern on the touch screen of the electronic device. A touch may be performed on the touch screen of the electronic device by an input unit such as a user's finger or electronic pen, and the gesture may include at least one of an input made by touching the touch screen with the user's finger or input unit (touching), an input made by tapping the touch screen with the input (tapping), an input made by moving a certain pattern while the touch screen is touched (dragging), and an input made by a movement while touch is maintained or by releasing the touch (dragging and dropping). The gesture may include inputs that may be generated on the touch screen, such as a swipe, a pinch and a flick, in addition to the above-mentioned inputs.

The electronic device may display a reproduction screen for content (hereinafter, referred to as "content reproduction screen") in operation 201. For example, the electronic device may execute a browser including Mozila, Firefox, Internet Explorer, Google Chrome, Opera or Safari, receive and display a web page corresponding to URL. As another example, the electronic device may execute an image viewer, reproduce and display image data.

The electronic device may enter an input mode in which an object may be added to a displayed content reproduction screen while the content reproduction screen is displayed, in operation 203. The object that may be added to the content reproduction screen may include a figure, number or text, and may be represented by a dot, line or plane.

The electronic device may sense a gesture of adding an object after entering an input in operation 205. In this example, the gesture may be a user's gesture that represents the shape of an object to be added. The gesture of adding the object may include representing the shape of the object to be added by a dot, line or plane.

For example, the electronic device may add an object corresponding to a user's gesture to the content reproduction screen in operation 207. Such an object may include a figure, number of text of which the shape is represented by a dot, line or plane.

In this case, the electronic device may add a separate layer to the content reproduction screen to add at least one object.

When a gesture is not sensed after an entrance into an input mode, the electronic device may check whether a gesture for adding an object is generated after the entrance into the input mode in operation 205.

The electronic device may recognize object information on an added object in operation 209. In this example, the object information represents how an initially displayed content reproduction screen is converted with the addition of an object, and may be information representing the shape of an object added to the content reproduction screen.

Such object information may be path information on a gesture generated by inputting a dot, line or plane in order to add the object, and an added object may be represented by graphic. As an example, the electronic device may use a markup language capable of representing 2D, such as a VML, a PGML, or a SVG, and a markup language capable of representing 3D graphic to generate object information.

The object information may include location information, color information, thickness information and font information on an object. For example, the object information may define the color of a dot, the color of a line, the color or thickness of a plane, and may define a font type and a font size when handwritten text data is converted into standard text data.

By using object information an added object as described above, it is possible to reproduce original content and object or share the object information with another electronic device.

For example, when transmitting a web page and an object added thereto to another electronic device, it is possible to transmit a web page to which the object is added as described above. In various embodiments, the web browser of the electronic device may have an object information generation function as described above and transmit an object formed by using this method and original content to another electronic device. Another electronic device may receive the object information and original content and display or reproduce content to which the object is added, by using a browser.

For example, the electronic device may add object information on an added object to content in operation 211. This is done so that the electronic device may also share an object added to content when sharing the content, and the electronic device may add object information by using various methods according to the type of content.

For example, the electronic device may add object information on the object to a field for recording meta data, in the case of content that the meta data may be recorded.

As an example of this case, the electronic device may add object information on an added object to an exchange image file format (i.e., EXif) included in image data when an object is added to the image data. An electronic device receiving such image data may use object information included in received image data to reproduce an object, and display a reproduced image on a reproduction screen for image data.

The electronic device may add object information on the object to the file name of content, in the case of content that may not record meta data. As an example of this case, the electronic device may include or add object information in or to URL or an internet address when an object is added to a web page. Adding object information to the internet address may mean adding or placing object information to or on the front, rear or intermediate part of the internet address.

In this case, the electronic device uses information providing a notice of the start and end of object information to add object information and thus it is possible to separate object information from an internet address for receiving a web page on an electronic device that receives an internet address to which object information is added. The electronic device receiving the internet address to which the object information is added may separate object information from internet addresses, receive a corresponding web page by using separated internet address information, reproduce an object by using separated object information and display a reproduced object along with a web page screen.

This is done so that the electronic device may also share an object added to content when sharing the content, and the electronic device may add object information by using various methods according to the type of content.

The electronic device may transmit and share content (e.g., image data to which object information is added, or an internet address of a web page to which object information is added) including object information on an added object, to and with another electronic device in operation 213.

Thus, the electronic device that receives content including the object information may extract object information included in received content, reproduce an object, and reproduce a reproduced object along with content.

According to various embodiments, the electronic device includes, in the object information, the location of a scroll (e.g., a display location on a web page) at a time when an object is added, in addition to object information represented by graphic, and an electronic device receiving the object information may load a web page and reproduce an added object at the location of a scroll corresponding to where the object is added.

According to various embodiments, the electronic device may provide information on the specification of a display currently supported and information on where an object is added so that an object may be reproduced at the same location on displays having different specifications.

According to various embodiments, the electronic device may perform an object information simplification operation in which the size of object information decreases. One of reasons for performing such an operation is to solve a limitation that a maximum size representing an internet address is exceeded due to object information.

According to various embodiments, the electronic device may decrease the number of pieces of characteristic information without changing the shape of an object, compress collected object information, adjust the size of a window to which an object may be added, and use text data directly as object information or share object information through a specific server such as a cloud server.

According to various embodiments, the electronic device may receive content including object information that is transmitted by another electronic device. The electronic device that receives content including the object information may reproduce and display content, extract object information included in received content and reproduce an object. In this case, a screen displayed on the electronic device may be the same as a screen formed by adding an object to a content reproduction screen on an electronic device that transmits content including the object.

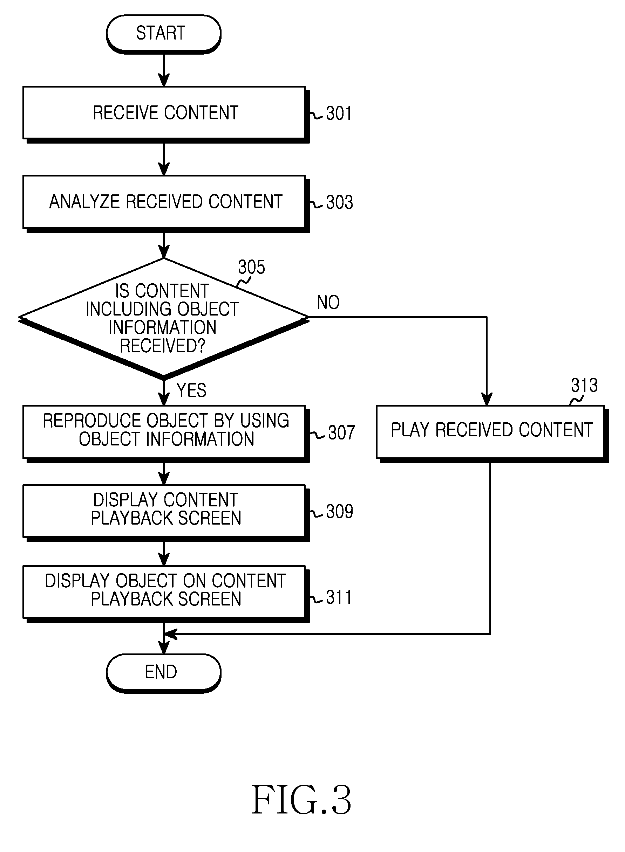

FIG. 3 is a flow chart of an operation of displaying received content on an electronic device according to an embodiment of the present disclosure.

Referring to FIG. 3, the electronic device may first receive content in operation 301. The electronic device may reproduce and display received content.

The electronic device may analyze received content in operation 303. In this example, the electronic device checks whether received content includes object information.

As an example, the electronic device may check whether there is object information in meta data on received content. As another example, the electronic device may check whether there is object information in the file name of received content. In this case, the electronic device may check object information by checking whether a file name includes information providing a notice of the start and end of object information.

The electronic device may analyze received content and perform different operations depending on whether object information is received in operation 305.

According to various embodiments, the electronic device may reproduce and display received content when there is no object information in received content in operation 313. As an example of this operation, the electronic device may receive and display a web page corresponding to the internet address of a received web page.

According to another embodiment, the electronic device may reproduce an added object on the content reproduction screen of an electronic device transmitting content by using object information in operation 307.

Since the object information may be path information on a gesture of representing the shape of an added object by a dot, line or plane on the content reproduction screen as mentioned above, the electronic device may check the location of a dot according to various embodiments, reproduce an object corresponding to a dot, and reproduce an object corresponding to a line or plane by using locations where a line starts and ends. In this case, the electronic device may check color and thickness information defined in object information and reproduce an object based on a color and thickness corresponding to checked information.

When receiving an internet address including the object information, the electronic device may distinguish object information from the internet address. The electronic device may receive a document written with a markup language by using the internet address and add the object information to a received document by using a text editor to perform an object reproduction operation.

The electronic device may reproduce received content and display a reproduction screen, in operation 309. The electronic device may display a displayed content reproduction screen and a reproduced object, in operation 311. The object is added to the content reproduction screen and the electronic device may display a reproduced object on the content reproduction screen. As object information is added to a document (written with a markup language) corresponding to a web page as described above, the electronic device may display a web page including an object by using a browser such as Firefox™, Internet Explorer™, Google Chrome™, Opera™, or

Safari™.

As an example, the object information may include a zoom ratio and the location of a scroll (e.g., a display location on a web page) at a time when an object is added, in addition to object information represented by graphic, and an electronic device receiving the object information may reproduce an added object at the location of a scroll corresponding to where the object is added, when loading a web page.

The electronic device may reproduce an object on a content reproduction screen and stop displaying a reproduced object or re-display an object of which the displaying is stopped, in response to a user's request.

The electronic device may reproduce objects according to an order in which objects are added. In this case, the electronic device may display only an object corresponding to a specific order or edit an object corresponding to a specific order. In this example, editing the object may mean deleting, moving or copying some of added objects. The electronic device may receive information on the display specification of an electronic device generating object information and reproduce an object at the same location.

When receiving object information generated through an object information simplification operation, the electronic device may reproduce the object information to information before simplification and display an added object. As an example, when receiving compressed object information, the electronic device may display an object by using uncompressed object information, and when receiving object information having a state in which the size of a window to add an object is adjusted is received, the electronic device may expand the size of the window and display an added object.

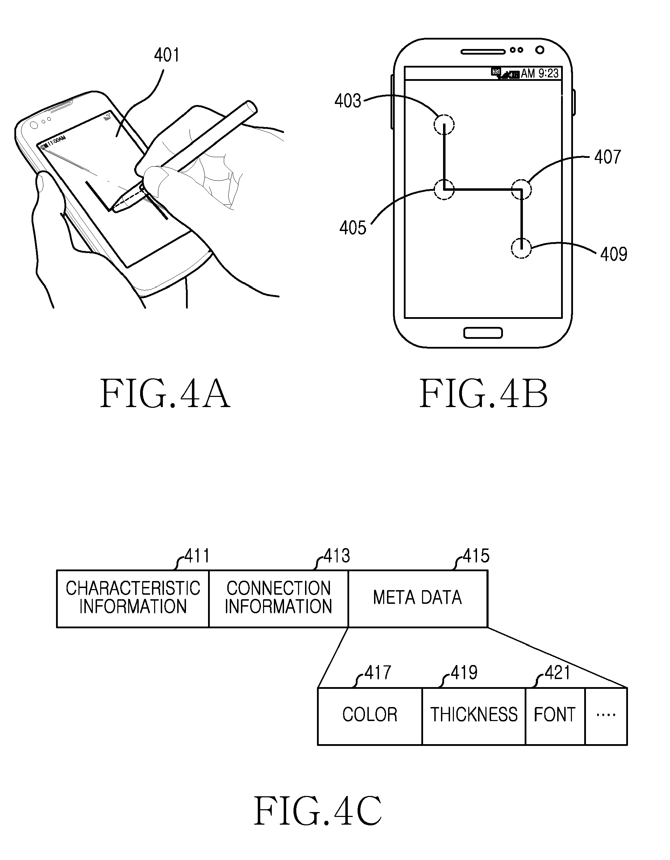

FIGS. 4A, 4B and 4C show a screen of generating object information on an electronic device according to an embodiment of the present disclosure.

Referring to FIGS. 4A, 4B and 4C, the electronic device may sense a user's gesture and add at least one object to a displayed content reproduction screen.

In this case, the electronic device may represent an object by using at least one of a dot, line and plane, and generate objection information on such an object. In this example, the object information may mean path information on a gesture, and may be information that defines the shape of a dot, line or plane.

For example, the electronic device may sense a user's gesture as shown in FIG.4A. Although in FIG 4.A, a gesture using an electronic pen is sensed 401, the electronic device may also sense a gesture through a user's finger or gestures using other input units. The electronic device may sense a gesture for adding the object while displaying a content reproduction screen.

The electronic device may generate an object corresponding to a gesture as shown in FIG. 4B and recognize object information on a generated object. The object information may include characteristic information 411 representing the shape of an object, connection information 413 on characteristic information, and meta data 415 on the shape of an object as shown in FIG. 4C. It is possible to further include other information that may represent the shape of an object in addition to the above-mentioned information or it is possible to include at least one of the above-mentioned information pieces.

In this example, the characteristic information 411 representing the shape of the object means reference information on the location (coordinate information), size and shape of an object. As an example, the characteristic information 411 may be coordinate information on the start point of a gesture and coordinate information on the end point of the gesture. The characteristic information 411 may include coordinate information on any point between the start point and end point of the gesture. Information on any point may be coordinate information on a point where a variation occurs.

For example, when inputting the alphabet "U", characteristic information on the alphabet "U" may be information on three points. Information on three points may be information on the start point and end point of a gesture and on a curved variation point that connects the start point and end point of the gesture.

The connection information 413 on the characteristic information means information on a line connecting the characteristic information. As an example, the connection information 413 may be information representing that the characteristic information is connected by a segment or a curved line.

The connection information may be information that is important for representing the shape of an object. When describing the alphabets "V" and "U" for example, the shapes of two alphabets are similar to each other and thus the characteristic information will also be similar. In the case of the alphabet "U", a gesture start point, a variation point, and a gesture end point are connected by curved lines but, in the case of the alphabet "V", a gesture start point, a variation point, and a gesture end point are connected by segments. As such, different objects may be represented according to the connection information.

The meta data 415 on the shape of the object may be information that defines the color 417 and thickness 419 of a component (dot, line or plane) representing the object. The meta data 415 on the shape of the object may include information 421 that defines a font (a font type or font size) for text data The information may be used when converting a handwritten text data object into standard text data.

Referring to FIG. 4B, object information on an object input by a user's gesture will be characteristic information on four points and connection information that characteristic information is connected by a segment. The characteristic information may include coordinate information on a gesture start point 403 and a gesture end point 409, and coordinate information on any points 405 and 407 between the start point and end point of the gesture.

The electronic device may sense a touch input on a touch screen and check characteristic information by checking a touch input point and release point and a variation point. The electronic device may sense an input generated by a finger or electronic pen. When an input generated by a finger is sensed, the electronic device may check a touch input point and release point and a variation point by using a change in sensitivity to a touch screen to check characteristic information. When an input generated by an electronic pen is sensed, the electronic device may check a touch input point and release point and a variation point by sensing pen pressure against a touch screen to check characteristic information. For example, it is possible to input a gesture with pen pressure equal to or higher a threshold value on a point to be used as characteristic information while a user adds an object. In addition, the meta data 415 on the shape of the object may include time information on when each dot, line or plane is inserted. The information may be used so that objects are sequentially displayed according to a time when displaying the objects. Information on any point between the start point and end point of the gesture may be defined by the electronic device directly or by a user.

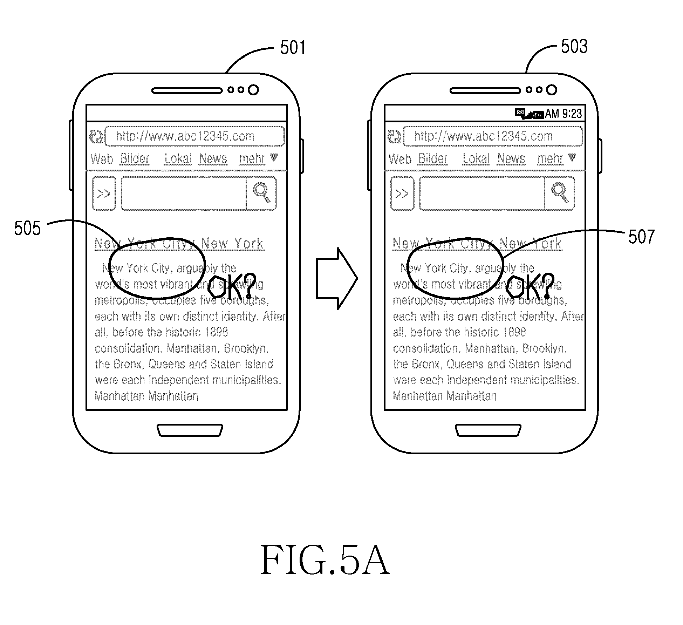

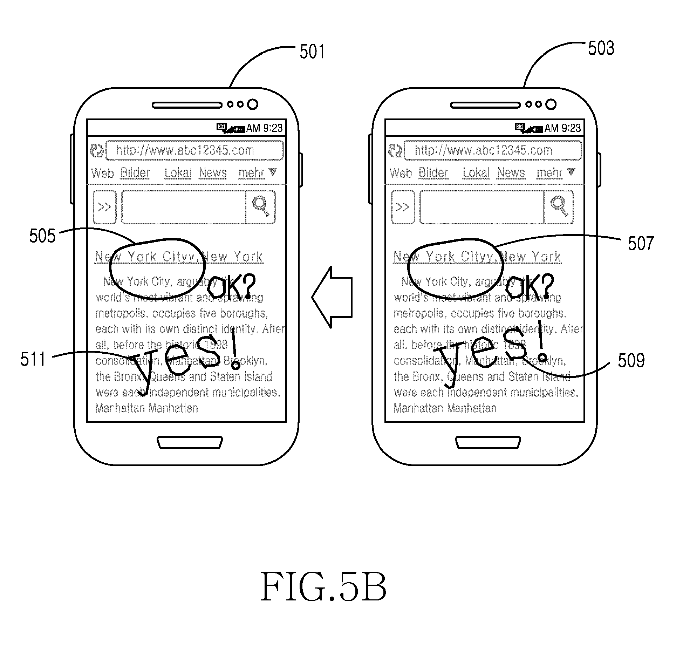

FIGS. 5A and 5B show an operation of adding an object to content on a first electronic device, transmitting object-added content to a second electronic device, and displaying the object-added content on the second electronic device (in embodiments of the present disclosure, the operation may generally be referred to as an operation of "sharing content") according to an embodiment of the present disclosure. The operation of sharing content may also include an operation of displaying previously object-added content later by using one electronic device.

Referring to FIGS. 5A and 5B, the electronic device as shown in FIGS. 5A and 5B may be defined as a first user's electronic device (a first electronic device) 501 and a second user's electronic device (a second electronic device) 503.

Referring to FIG. 5A, it is assumed that the electronic device displays content corresponding to a web page through a browser. A user of the first electronic device 501 may share a displayed web page with a user of the second electronic device 503.

As an example of a method of sharing a web page, the user of the first electronic device 501 may provide the URL of a web page to the second electronic device 503, and the second electronic device 503 may display a web page by using the URL of the received web page on e.g., a web browser.

The user of the first electronic device 501 may add an object such as a figure, number or text in order to highlight a portion of a displayed web page or add his or her opinion on the web page. The user of the first electronic device 501 may also want to share an added object 505 as well as the web page.

In this case, the first electronic device 501 may share information representing the components of the object along with the web page. As mentioned in the embodiments above, information representing a component (a dot, line or plane) configuring an object may be referred to as object information.

The electronic device may generate information on a location, thickness or color for a component such as a dot, line or plane configuring an object added to the web page. As such, the first electronic device may generate object information on an object such as a text, figure or number and share generated object information and an original web page with the second electronic device 503.

According to various embodiments, the first electronic device 501 may include and share object information on the object 505 in the URL of a web page according to various embodiments. In this case, the first electronic device 501 may add object information to the front, rear or intermediate part of the URL of a web page. In such a case, it is possible to add object information by using information (a specific sign) that provides a notice of the start and end of the object information.

The second electronic device 503 that receives the URL of a web page including object information as described above may separate object information corresponding to an added object from an address for receiving a web page, on the URL of a received web page. Thus, the second electronic device 503 may receive and display a corresponding web page by using a separated address. Also, the second electronic device 503 may generate a component representing an object by using separated object information, reproduce an object 507 added to a web page and display the object on a web page.

A user of the second electronic device 503 reproducing the added object as described above may also add a new object 509 to a shared web page and a reproduced object. In this example, adding an object may mean adding e.g., a new text or graphic to a web page including existing objects.

For example, as shown in FIG. 5B, the second electronic device 503 may sense a user's gesture while displaying a shared web page and a reproduced object, generate a new object 509, generate object information representing a component configuring a generated object 509 and share the object information with the first electronic device 501. In this case, the second electronic device 503 may add and share object information on a newly added object to object information provided from the first electronic device 501.

Thus, the first electronic device 501 may separate object information from the URL of a received web page as shown in FIG. 5B, receive and display a corresponding web page, reproduce an object 511 added to a web page by using separated object information and display the object on a web page.

FIG. 5B shows that objects added by a user of the first electronic device 501 and objects added by a user of the second electronic device 503 are displayed along with a web page. In FIGS. 5A and 5B, the objects added by the user of the first electronic device 501 may be a circular figure and text data "OK?" the objects added by the user of the second electronic device 503 may be text data "Yes!".

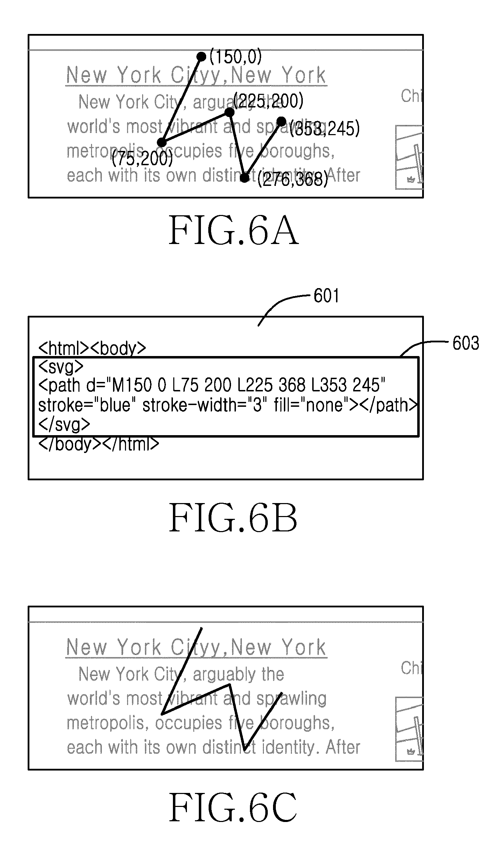

FIGS. 6A, 6B and 6C show an operation of generating object information on an electronic device according to various embodiments of the present disclosure. FIG. 6A shows a result of analyzing an object (a W-shaped figure) added by a user while the electronic device displays a content reproduction screen.

Referring to FIGS. 6A, 6B and 6C, the electronic device may sense a user's gesture as shown in FIG. 6A and add an object for the gesture to a content reproduction screen. The electronic device may extract, generate or recognize object information that may represent the shape of an added object. In FIG. 6A, the object information may be coordinate information on the start point of a gesture, coordinate information on the end point of the gesture and coordinate information on a variation point between the start point and end point of the gesture. The object information may be information that each point is connected by a segment.

Such an electronic device may add an object added by a user to information on a web page according to various embodiments. For example, the electronic device may include object information in a web page on a web browser.

In various embodiments, it is possible to add object information 603 by using a tag within an HTML document 601 as shown in FIG. 6B. As described previously, it is possible to generate object information by using at least one of a plurality of graphic languages.

In the present embodiment, object information may be generated by using SVG that is a type of a graphic language. In the present embodiment, parts representing object information is as follows:
<path d="M150 0 L75 200 L225 200 L276 368 L353 245" stroke="blue" stroke-width="3" fill="none"></path>.

For example, an object may be represented as a shape in which five coordinates (150,0), (75,200), (225,200), (276,368), and (353,245) are connected by blue lines.

When generating object information by using SVG as described above, the electronic device may add the object information to an HTML document 601 by using a text editor according to an example.

It is possible to transmit the document to another electronic device by using an e-mail, text or messenger. An electronic device that receives an HTML document to which the object information is added may reproduce a received HTML document and display a web page including the object, as shown in FIG. 6C.

In the present embodiment, the electronic device may add an object added by a user to a web page. In another embodiment, the object may be added to a web page by a specific server. This may be provided when the electronic device does not provide a function of adding an object to the web page. Thus, the electronic device provides the URL of a web page and object information to the specific server and an object may be added to the web page by the specific server.

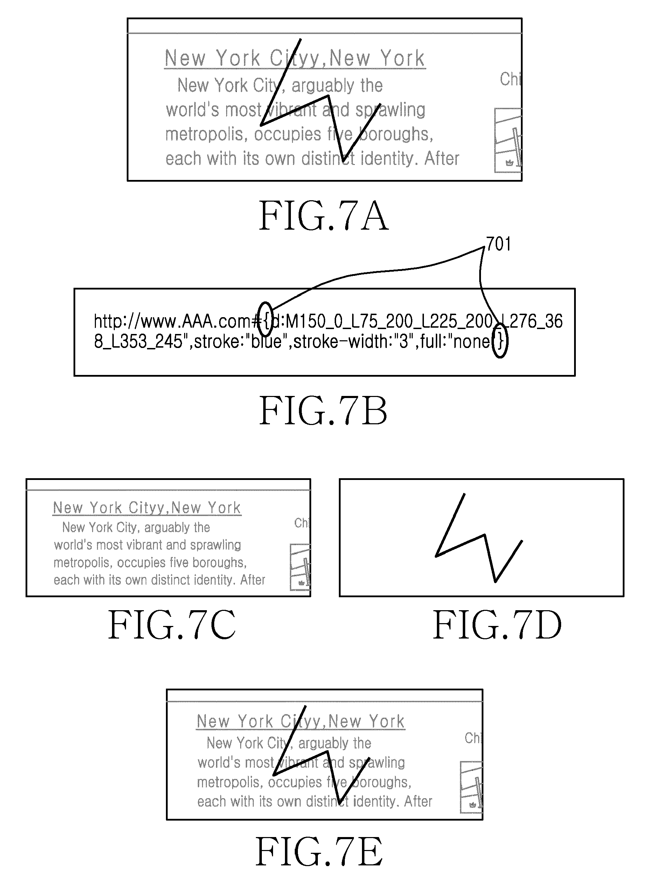

FIGS. 7A, 7B. 7C, 7D and 7E show another operation of generating object information on an electronic device according to an embodiment of the present disclosure.

Referring to FIGS. 7A, 7B. 7C, 7D and 7E, a result of analyzing an object (a W-shaped figure) added by a user while an electronic device displays a content reproduction screen in FIG. 7A. First, the electronic device may sense a user's gesture as shown in FIG. 7A and add an object for the gesture to a content reproduction screen.

The electronic device may extract, generate or recognize object information that may represent the shape of an added object. In FIG. 7A, the object information may be coordinate information on the start point of the gesture, coordinate information on the end point of the gesture and coordinate information on a variation point between the start point and end point of the gesture. The object information may be information that each point is connected by a segment.

Such an electronic device may include object information on an object added by a user in the URL of a web page according to another embodiment. As an example, as shown in FIG. 7B, it is possible to add object information to the URL of a web page by using information 701 that provides a notice of the start and end of the object information. (In FIG 7B, information providing a notice of the start of the object information may be "{" and information providing a notice of the end of the object information may be "}")

Thus, another electronic device that receives the URL of a web page to which the object information is added may automatically or manually input the URL and the object information into the address box of a web browser. The electronic device separates the object information from the URL of a received web page, receives and displays a corresponding web page as shown in FIG. 7C. In addition, the electronic device may reproduce an object by using the object information as shown in FIG. 7D. The electronic device that receives the URL of a web page to which the object information is added may display a reproduced object on a web page as shown in FIG. 7E.

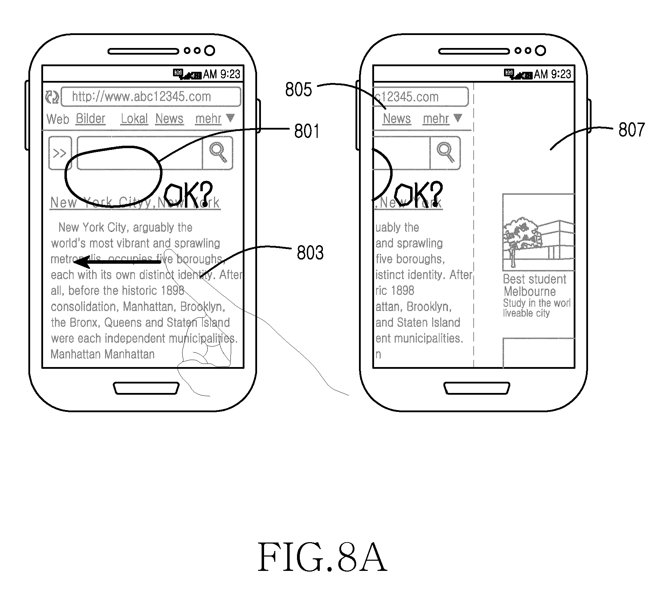

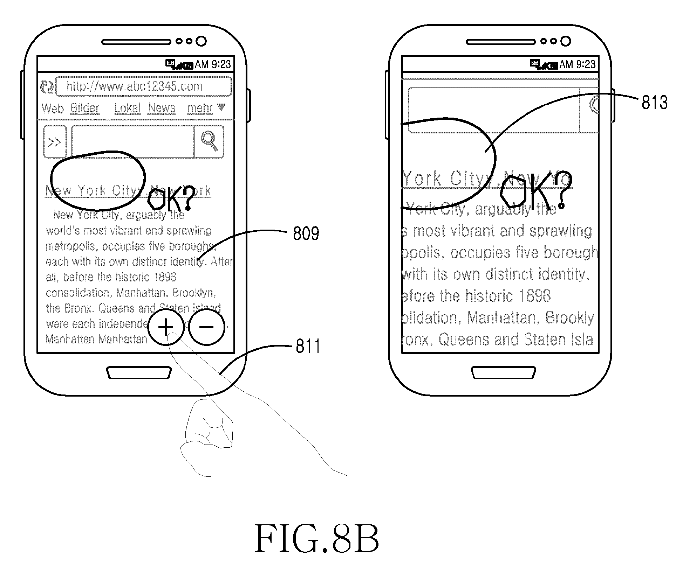

FIGS. 8A and 8B show a screen of displaying reproduced content on an electronic device according to various embodiments of the present disclosure.

Referring to FIGS. 8A and 8B, by using content information and object information, the electronic device may reproduce content and an added object and display them together (e.g., by using a web browser or an image display app).

After reproducing the content and the added object, it is possible to move a displayed screen or change a display ratio on the electronic device.

If a user of an electronic device inputs a gesture 803 of moving a screen on which an object 801 added to content is reproduced and displayed as shown in FIG. 8A, the electronic device may move a screen including the added object. In FIG. 8A, the object reproduced and displayed may be a circular figure and text data "OK?".

While displaying the added object, it is also possible to move the added object as well as content, according to a screen change direction or moving range. FIG. 8A shows that a portion of previously displayed content and a portion of an added object move 805 and a portion of a new screen is displayed 807.

When a user of the electronic device inputs a gesture of scrolling a screen, the electronic device may scroll a screen including the added object.

If a user of the electronic device inputs a gesture 811 of adjusting the display ratio of a screen 809 on which an object added to content is reproduced and displayed as shown in FIG. 8B, the electronic device may adjust the display ratio of the screen including the added object. For example, the electronic device may expand 813 or reduce content and the added object together according to an adjustment ratio, while displaying the added object.

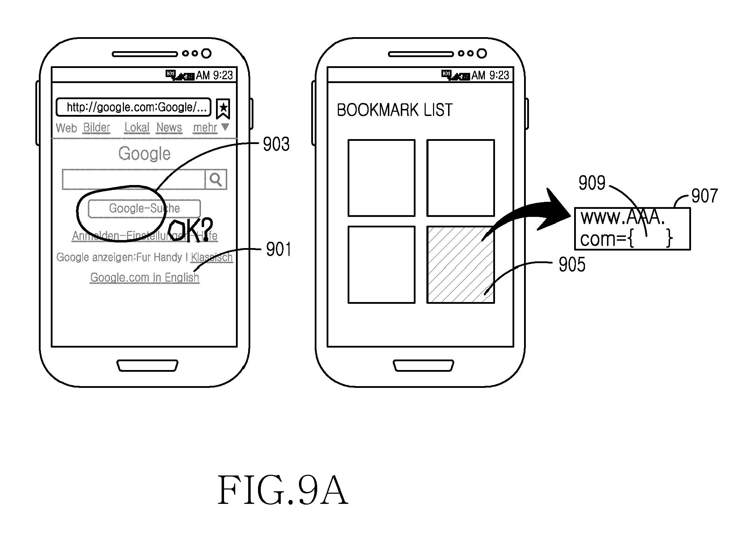

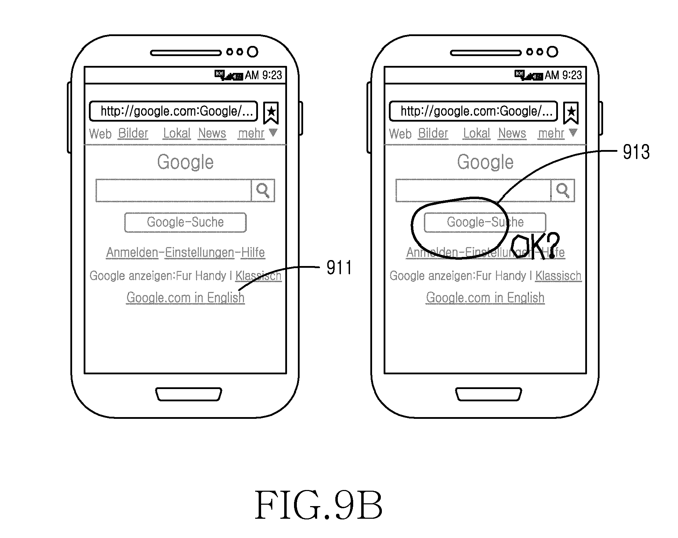

FIGS. 9A and 9B show an operation of storing a content reproduction screen as a bookmark on an electronic device according to an embodiment of the present disclosure.

Referring to FIGS. 9A and 9B, the electronic device may reproduce and display the content and an object added to the content by using information (i.e., content information and object information) provided from another electronic device.

A user of the electronic device may add a new object to a displayed screen. Referring to FIGS. 9A and 9B, a circular figure and text data "OK?" may be the new object.

A user of the electronic device may store, a screen on which the object added to the content is reproduced and displayed, as a bookmark. In this example, storing, the screen on which the object added to the content is reproduced and displayed, as the bookmark means that a user may display content provided from another electronic device and an added content when he or she wants to see them.

If a user of an electronic device selects a menu or inputs a gesture 903 to store the screen on which an object added to content 901 is reproduced and displayed as a bookmark as shown in FIG. 9A, the electronic device may store content information and object information on an added object together as a bookmark.

For example, when storing a web page as a bookmark, the electronic device may generally store the internet address information on the web page as a bookmark and receive a bookmarked web page later by using internet address information on the web page stored. However, since the web page stored by using such a method does has no information on a previously added object, it is impossible to reproduce the object.

However, the electronic device may store object information on the added object along with the URL of a web page and display a bookmarked web page and a previously added object together later by using stored information.

According to various embodiments, bookmark information 907 on the web page 905 may further store object information 909 in the URL of a web page.

In addition to object information represented by graphic, the electronic device may include the location of a scroll (a display location on a web page) at a time when an object is added, in the object information.

FIG. 9B shows how the selection of booked URL is sensed and a web page is received and displayed. When, the selection of a bookmark storing only the URL of a web page is sensed, the electronic device may receive and display a web page 911 stored in the bookmark.

However, when the selection of a bookmark storing the URL of a web page and objection information is sensed, the electronic device may receive and display a web page stored as a bookmark, reproduce an object corresponding to object information and display 913 the object on the web page.

When recognizing that the object information includes the location of a scroll (e.g., a display location on a web page) at a time when an object is added, in addition to object information represented by graphic, the electronic device may load a web page, change the location of a scroll corresponding to where the object is added, and reproduce an added object.

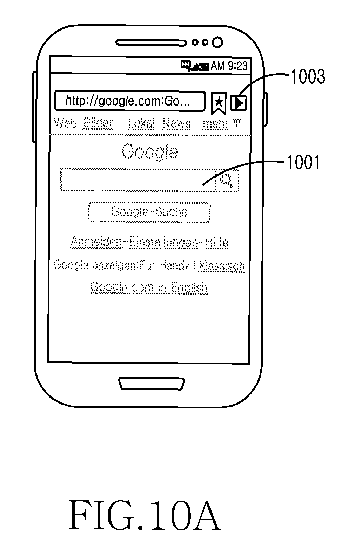

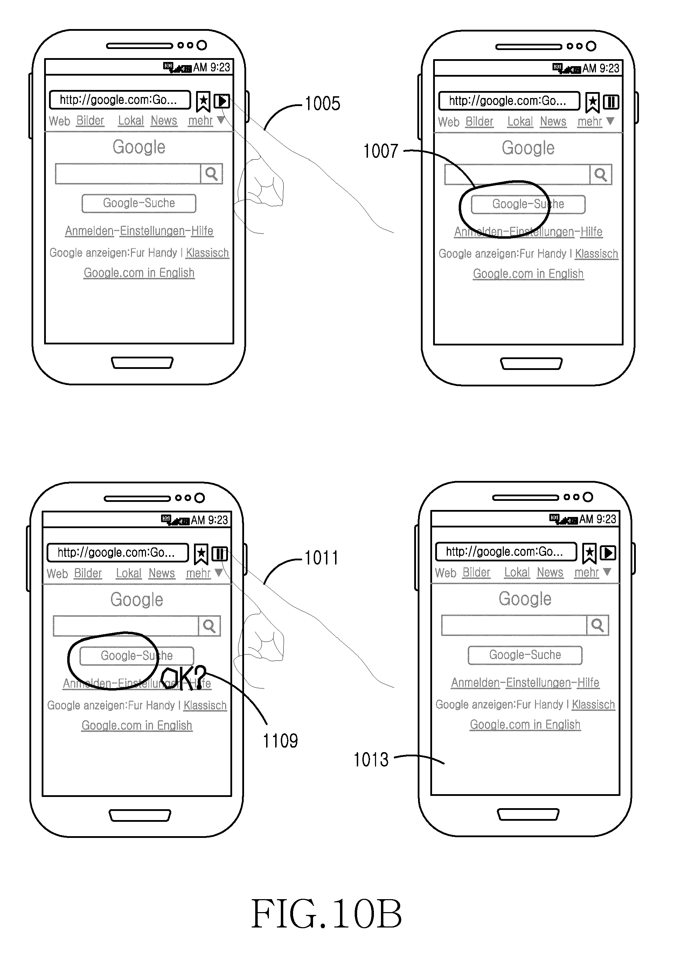

FIGS. 10A and 10B show an operation of reproducing an object added to content on an electronic device according to an embodiment of the present disclosure.

Referring to FIGS. 10A and 10B, when reproducing content including object information on an object, the electronic device may reproduce an object by using the object information and display a reproduced object on a content reproduction screen.

In this example, reproducing content may mean reproducing shared content to which object information is added or bookmarked content.

As described above, the electronic device may reproduce and display an object when reproducing content but in another embodiment, the electronic device may reproduce and display the object after the reproduction of content when he or she wants to see.

For example, the electronic device may display, a menu or button 1003 to control the display of an object, on a content reproduction screen 1001 as shown in FIG. 10A. For example, the electronic device may display a browser including a menu or button to control the display of the object, and it is possible to sense a menu selection or a button input and sequentially display (animation-play) objects according to when objects are added.

If a user's gesture 1005 of selecting a menu or button 1003 to control the display of an object is sensed while a content reproduction screen is displayed as shown in FIG. 10B, the electronic device may reproduce a first object 1007 by using object information, reproduce and display a second object 1009 on the content reproduction screen. In FIG. 10B, the first object may be a circular figure and the second object may be text data "OK?".

If a user's gesture 1009 of selecting a menu or button 1011 to control the display of the object is sensed while the object is displayed on a content reproduction screen, the electronic device may hide 1013 a displayed object from the content reproduction screen.

By sensing a menu or button input, the electronic device may delete the displayed first object or second object from the content reproduction screen or copy the displayed first object or second object and add the displayed first object or second object to another part of the content reproduction screen or to another content reproduction screen.

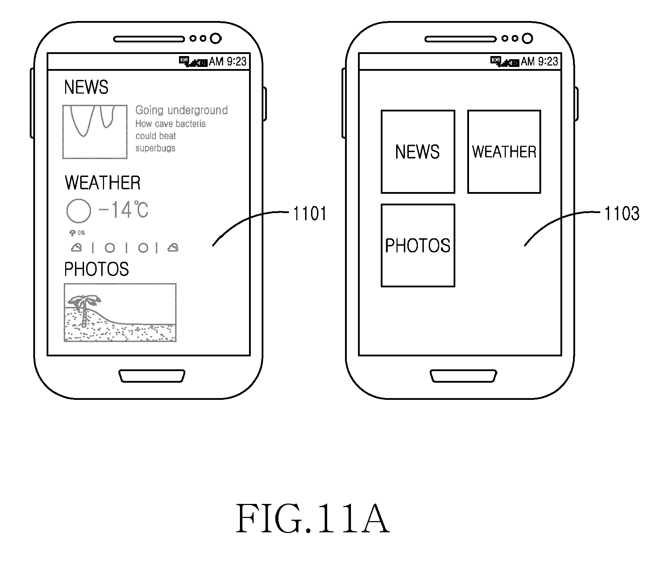

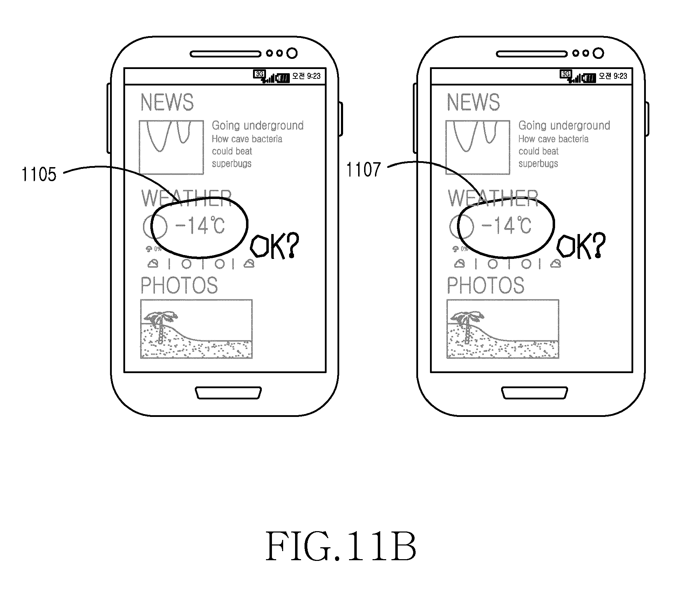

FIGS. 11A and 11B show another operation of reproducing an object added to content on an electronic device according to an embodiment of the present disclosure.

Referring to FIGS. 11A and 11B, when reproducing content including object information on an object, the electronic device may reproduce an object by using the object information and displaying a reproduced object on a content reproduction screen.

In this example, reproducing content may mean reproducing shared content to which object information is added or bookmarked content.

As described above, the electronic device may reproduce and display an object when reproducing content or when a menu to execute an object included in a content reproduction screen is selected.

The object is added to the content reproduction screen and may be reproduced when a reproduction screen having the same content as when the object is added is displayed.

In general, the electronic device may reproduce shared content by using various methods. The electronic device may reproduce content by using the same method as an electronic device providing the content but may reproduce the content by using a different method from the electronic device providing the content, according to the type and setting of an installed application.

As an example, a web page may have different display methods according to the setting of an electronic device. In this example, the display methods include a method 1101 of displaying a web page optimized to a PC screen and a method 1103 of displaying a web page optimized to a mobile environment. The web page optimized to the PC screen may be a web page providing data to a page having a large screen such as a monitor and may be a web page providing only important data to a page having a small screen.

Specifically, an electronic device providing content may display a web page optimized to a PC screen and add an object, and an electronic device receiving content may be set to display a web page optimized to a mobile environment.

In this case, even if receiving URL for a web page optimized to the PC screen, the electronic device receiving content may display a web page optimized to the mobile environment.

When the display methods of the electronic device providing content and the electronic device receiving content are different from each other, content reproduction screens are not the same. Thus, as shown in FIG. 11A, the electronic device receiving content may not reproduce and display an object even if provided content includes object information on the object.

However, when the display methods of the electronic device providing content and the electronic device receiving content are the same, content reproduction screens are the same. Thus, as shown in FIG. 11B, the electronic device receiving content may reproduce 1107 an object by using object information on the object 1105 included in provided content and display a reproduced object on a reproduction screen. The left image of FIG. 11B is the screen of an electronic device including an object and the right image of FIG. 11B is the screen of another electronic device receiving content that the electronic device transmits.

When the display methods of the electronic device providing content and the electronic device receiving content are different from each other, the electronic device receiving content may reproduce and display an object along with content according to the display method of the electronic device providing content. For example, when an electronic device set to display a web page optimized to a mobile environment receives URL for a web page optimized to a PC screen, the electronic device may receive a web page optimized to the PC screen.

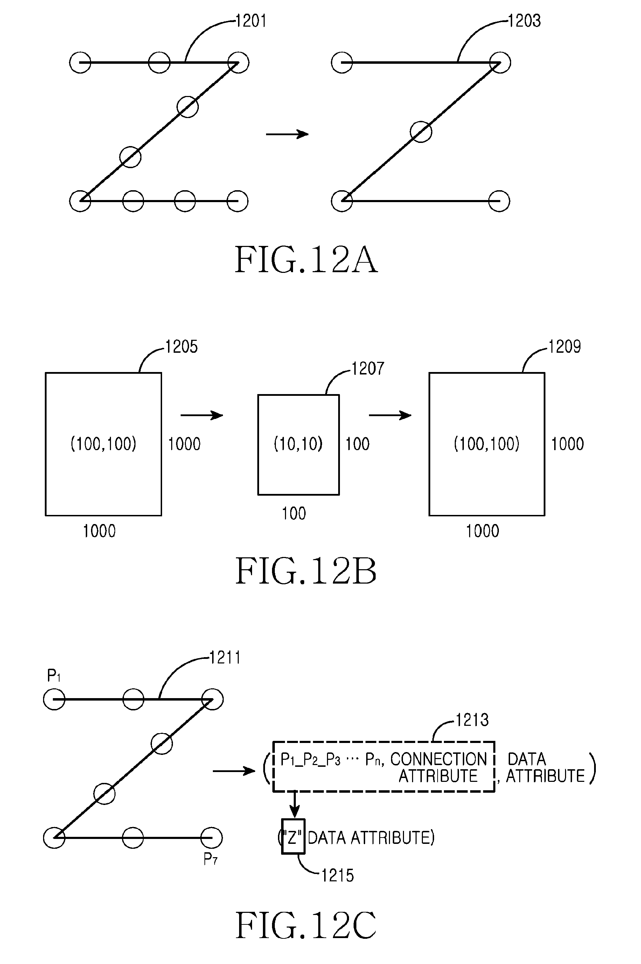

FIGS. 12A, 12B and 12C show an operation of generating object information on an electronic device according to an embodiment of the present disclosure.

Referring to FIGS. 12A, 12B and 12C, the electronic device may collect object information on an object when sensing a user's gesture of generating the object on content.

The object information may include characteristic information representing the shape of an object, connection information on characteristic information, and meta data on the shape of an object as described previously.

The object information represents the shape of an object and as the object information increases, it is possible to represent an object similar to the object's original shape. For example, the characteristic information among the object information is information that may be a criterion for the location, size or shape of an object, and as the characteristic information increases, it is possible to represent a natural object without distortion.

The electronic device may include such object information in content or add such object information to a file name but the content may not generally include object information exceeding a predefined size.

In this case, the electronic device may combine at least one of the following methods to perform an object-information simplification operation in which the size of object information decreases.

The electronic device may decrease the number of pieces of characteristic information within a range in which the shape of an object does not significantly vary. For example, the electronic device may decrease nine pieces of characteristic information (circles on the alphabet "Z") 1201 to five pieces 1203 in the case of the alphabet "Z" as shown in FIG. 12A.

In this case, the electronic device may decrease the number of pieces of characteristic information within a range in which the shape of an object does not vary as described previously, and referring to FIG. 12A, it is possible to reproduce the shape of the alphabet "Z" even though the number of pieces of characteristic information decreases.

The electronic device may decrease the number of pieces of characteristic information within a range in which it is possible to infer an object, without representing the object generated by the gesture as is. As an example, since a handwriting-type text may have many pieces of information, the electronic device may decrease the number of pieces of characteristic information by representing the handwriting-type text as a printing-type text. As another example, since the shape of an object may be represented in detail by the gesture and thus the number of pieces of characteristic information may be large, the electronic device may decrease the number of pieces of characteristic information by removing a portion of the shape of the object represented in detail.

The electronic device may compress collected object information to decrease the size of object information. This is because characteristic information among object information representing the shape of an object may be represented as a set of information on consecutive points and thus configured as a set of numbers most of which have similar numeric values. It is possible to decrease the size of object information by applying an existing lossless compression method to such information.

For example, when characteristic information representing the shape of the object has "1111000", the electronic device may compress characteristic information into 1[4]0[3]. Compressed characteristic information as described above may be analyzed as characteristic information that there are four "1"s consecutively and three "0"s consecutively. The numbers in brackets mean the number of same pieces of characteristic information.

As shown in FIG. 12B, the electronic device may adjust the size of a window to which an object may be added, and thus decrease the size of object information. For example, on the assumption that characteristic information that may be represented in the space of a window 1205 having a size of 1000*1000 is (100, 100), characteristic information may decrease to (10, 10) when the size of the window is adjusted 1207 to 100*100. In this case, since the object needs to be reproduced in a window 1209 having a size of 1000*1000, the size of the object before adjustment needs to be recorded.

The electronic device may provide direct information on text data without representing an object for text data as its shape and thus adjust the size of object information. In some cases, using the text data directly as object information may decrease the size of data in comparison to providing characteristic information on text data and enhance the readability of text data.

The electronic device may use text data instead of characteristic information to adjust the size of object information. In this case, the electronic device may check meta data (such as a font type or font size) on text data and add the meta data to object information.

FIG. 12C shows when the electronic device generates object information including nine pieces of characteristic information (circles on the alphabet "Z") 1211, connection information (a connection attribute) connecting the characteristic information, and a data attribute for the alphabet "Z" being an object but the characteristic information and the connection information 1213 are replaced with text data 1215 to decrease the size of the object information.

In this case, when sensing that text data is input, the electronic device may generate object information including text information and information on the same or similar font or size as the text data that a user inputs. After sensing a user's input, the electronic device may provide text data as object information.

The electronic device may share object information on an object through a specific server. In this case, the electronic device may provide an ID that may identify object information, register the ID with a server and receive object information from another electronic device by using the ID.

When collecting object information having a size that may be added to content while collecting object information, the electronic device may display a menu for simplifying object information to perform an object information simplification operation by using at least one of the above-mentioned methods according to user's selection.

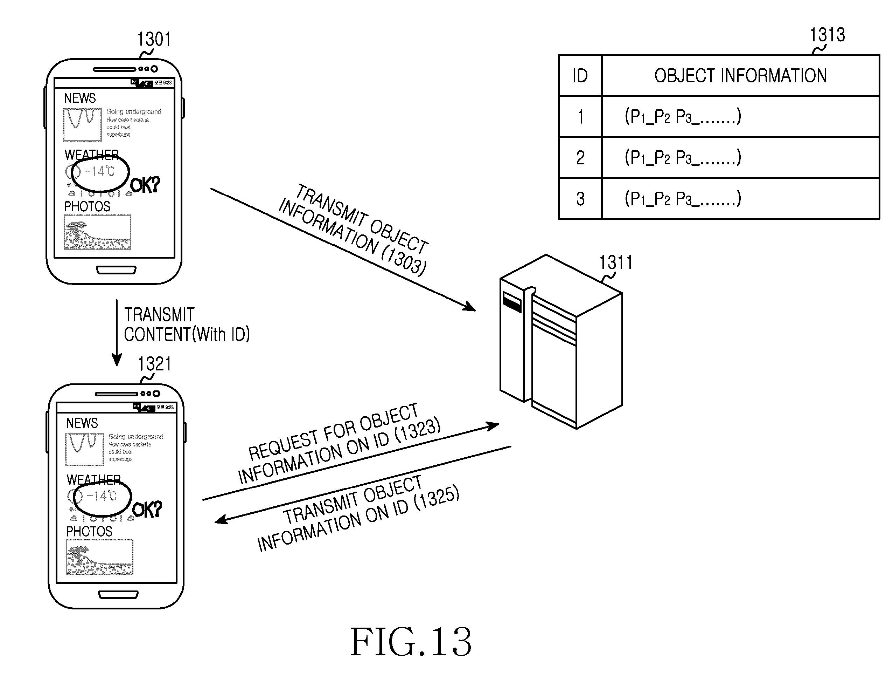

FIG. 13 shows an operation of sharing object information by a server on an electronic device according to an embodiment of the present disclosure.

Referring to FIG. 13, the electronic device may share object information on an object added to content through a specific server. This is because as object information includes more information, it is possible to represent an object similar to the object's original shape but the size of object information that may be added to content is limited.

When an object is added to a content execution screen, an electronic device 1301 may collect object information on an added object and provide an ID corresponding to content to be shared to collected object information. When a content execution screen to which an object is added is shared with another electronic device 1321, the electronic device may provide only content to the other electronic device. In this case, the electronic device may also provide the ID provided to object information when sharing content.

The electronic device 1301 may transmit 1303 collected object information to a server 1311 that manages object information. In this case, the electronic device 1301 may also transmit the ID provided to object information to the server 1311. Thus, the server 1311 may manage object information 1313 that is identified with the ID.

The electronic device 1321 receiving the ID for object information may use a received ID to request 1323 the server 1311 to transmit object information and may thus receive 1325 object information corresponding to the ID. The electronic device 1321 receiving content and object information may execute received content, reproduce and display an object by using object information.

Embodiments as mentioned in the present disclosure may be applied to a cloud system. For example, the electronic device may store object information in a cloud server, download object information when reproducing content, and display an object added to content.

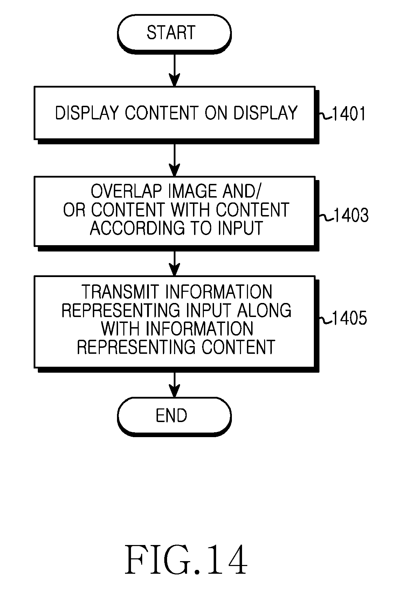

FIG. 14 is a flow chart of an operation of sharing content on an electronic device according to an embodiment of the present disclosure.

Referring to FIG. 14, the electronic device may display content on a display unit in operation 1401. That is, the electronic device may display a reproduction screen for digital content such as a web page, image data, audio data, video data, or document data.

The electronic device may sense an input to displayed content and overlap an image and/or text with at least a portion of displayed content in operation 1403.

The electronic device senses a user's image and/or text input while displaying content, and displays an image and/or text so that the image and/or text is overlapped with the content.

The electronic device may include information representing the input in content information and transmit the information to a second electronic device in operation 1405. The information representing the input is information representing the shape of an image and/or text overlapped with content, and the electronic device may generate the information by using a graphic language such as SVG.

Also, the electronic device may include information representing the input in the file name of content, the URL of a web page or the meta data on content and transmit the information to the second electronic device.

The electronic device according to the present disclosure may include an electronic pen as an input unit. In this case, when the electronic device senses the electronic pen and a touch input together on a content reproduction screen or senses an input pressing a screen for a long time in a state that the button of the electronic pen is pressed, it is possible to enter an input mode in which an object may be added.

The electronic device may recognize, an electronic pen's input in an input mode, as adding an object to a content reproduction screen, and add and display an object corresponding to the electronic pen's input on the content reproduction screen.

The electronic device according to the present disclosure may not include an input unit such as an electronic pen. In this case, the electronic device may sense a touch input by a user finger in various embodiments.

In this case, the electronic device may sense a predefined gesture such as a long touch input for two points or sense a specific-button input on a content reproduction screen in various embodiments, and enter an input mode in which an object may be added.

The electronic device may recognize, a user's drag gesture in an input mode, as adding an object to a content reproduction screen, and add and display an object corresponding to the drag gesture on the content reproduction screen.

The electronic device may distinguish a gesture of adding an object from a gesture of controlling a screen in such an input mode. This is because a gesture of dragging with one finger may be a gesture of adding an object and a gesture of dragging with two fingers may be a gesture of changing a screen. The electronic device may expand a screen as before by using a pinch zoom and change a screen when dragging in a state that a touch is maintained with two fingers.

The electronic device may sense a predefined gesture to end an input mode in which an object is added. As an example, when the electronic device senses a predefined gesture such as a long touch input for two points or sense a specific-button input on a content reproduction screen in an input mode, it is possible to end the input mode.

The method of sharing content as mentioned in the present disclosure may include various embodiments as will be described below. The method of sharing content may include displaying content on a display, displaying an image and/or text input to the display so that the image and/or text is overlapped with at least a portion of the content, and transmitting information representing the input or object information along with information representing the content. The content may include at least one of a web page, digital document data, audio data, video data and image data. The information representing the input may include a markup language that represents the shape of graphic.

The information representing the content may include an HTML document, the information representing the input may include SVG information, and the information representing the input may be included in the HTML document.

A method of display content as mentioned in the present disclosure may include various embodiments as will be described below. The method of displaying the content may include receiving information representing the content and information representing an image and/or text to be displayed on the content, displaying the content on the display and displaying the image and/or text on the display so that the image and/or text is overlapped with at least a portion of the content.

The information representing the image and/or text to be displayed on the content may be received from a server by using the information representing the content. After the image and/or text is displaced, the displaying of the image and/or text displayed on the content may be stopped according to an input. The image and/or text may be displayed on the content according to a generated order. The characteristic information of at least one of the image and the text may be reduced to a minimum amount of the characteristic information needed to accurately reproduce the at least one of the image and the text.

Each of the above-described elements of the electronic device according to the present disclosure may include at least one of components and the names of corresponding elements may vary depending on the type of an electronic device. The electronic device according to the present disclosure may include at least one of the above-described elements and some elements may be left out or other elements may be further included. Also, some of the elements of the electronic device according to the present disclosure are combined to form an entity, which may equally perform the functions of corresponding elements before being combined.

The term "module" used in the present disclosure may mean a unit including one of hardware, software and firmware, for example or a combination of two or more thereof. The "module" may be interchangeably used with the term "unit", "logic", "logical block", "component", or "circuit", for example. The "module" may be an elementary unit of or a portion of an integral component. The "module" may also be an elementary unit for performing at least one of functions or a portion of the elementary unit. The "module" may be implemented mechanically or electronically. For example, the "module" according to the present disclosure may include at least one of an Application-Specific Integrated Circuit (ASIC) chip, a Field-Programmable Gate Array (FPGA) and a programmable-logic device that perform some operations and has been known or will be developed.

According to various embodiments, at least a portion of the device (such as modules or their functions) or method (such as operations) according to the present disclosure may be implemented as a command stored in a computer-readable storage medium in the form of a programming module. When the command is executed by at least one processor, the at least one processor may execute a function corresponding to the command. The computer readable storage medium may be a memory, for example. At least a portion of the programming module may be implemented (e.g., executed) by e.g., the processor. At least a portion of the programming module may include e.g., a module, program, a routine, a set of instructions or a process for executing one or more functions. The computer readable recording medium may include a hardware device that is especially configured to store and execute a program command (such as a programming module), including a magnetic media such as a hard disk, a floppy disk and a magnetic tape, a magneto-optical media such as a Compact Disk Read Only Memory (CD-ROM), and a Digital Versatile Disc (DVD), a magneto-optical media such as a floptical disk, a Read Only Memory (ROM), a Random Access Memory (RAM), and a flash memory. Also, the program command may include a machine language code made by a compiler as well as a high-level language code that may be executed by a computer by using an interpreter. The above-described hardware device may be configured to operate by one or more software modules to execute the operations of the present disclosure and vice versa.

The module or programming module according to the present disclosure may include at least one of the above-described elements and some elements may be left out or other elements may be further included. Operations executed by a module, a programming module or another element according to the present disclosure may be executed by using a sequential, parallel, repetitive or heuristic method. Also, the execution order of some operations may vary, some operations may be left out or further operations may be added.

According to various embodiments, in the case of a storage medium storing commands, the commands are set to enable the at least one processor to perform at least one of operations when executed by at least one processor, and the at least one operation may include displaying an image and/or text input by the electronic device so that the image and/or text is overlapped with at least a portion of the content, and storing information representing the input along with information representing the content.

According to various embodiments, the at least one operation may include receiving information representing the content and object information representing the image and/or text to be displayed on the content, displaying the content on the display, and displaying the image and/or text on the display so that the image and/or text is overlapped with at least a portion of the content, based on at least a portion of the object information.

Various embodiments may share content including an object added by a user's gesture on an electronic device and thus an electronic device receiving the content may also display the object along with the content, thereby enhancing content sharing performance.

While the present disclosure has been shown and described with reference to various embodiments thereof, it will be understood by those skilled in the art that various changes in form and details may be made therein without departing from the spirit and the scope of the present disclosure as defined by the appended claims and their equivalents.

## Claims

1. An electronic device for sharing content, the electronic device comprising:
a display; and
a processor,
wherein the processor is configured to:
display content on the display;
display an input of at least one of an image and text to the display, the at least one of the image and the text being overlapped with at least a portion of the content; and
transmit information representing the input along with information representing the content.

2. The electronic device of claim 1, wherein the content includes at least one of a web page, digital document data, audio data, video data and image data.

3. The electronic device of claim 1, wherein the information representing the input includes a markup language.

4. The electronic device of claim 3, wherein the information representing the input includes Scalable Vector Graphic (SVG) information.

5. The electronic device of claim 1, wherein the information representing the content includes the Uniform Resource Locator (URL) of a web page, the information representing the input includes SVG information, and
wherein the processor is configured to transmit the URL and the SVG information together.

6. The electronic device of claim 5, wherein the processor adds the SVG information to the end of the URL, and transmits the URL and the SVG information together.

7. The electronic device of claim 1, wherein, when the transmitting of the information representing the input, the processor compresses and transmits a portion of coordinate information on at least one of the image and the text displayed by the information representing one of the input and the coordinate information.

8. The electronic device of claim 1, wherein, when the transmitting of the information representing the input, the processor converts and transmits, coordinate information on at least one of the image and the text displayed by the information representing the input, into text data.

9. The electronic device of claim 1, wherein the processor lists and stores the information representing the at least one of the image and the text and the information representing the content.

10. The electronic device of claim 1, wherein the processor is configured to:
receive information representing content and object information representing at least one of an image and text to be displayed on the content;
display content on the display; and
display the at least one of the image and the text on the display, the at least one of the image and the text being overlapped with at least a portion of the content.

11. A method of operating an electronic device, the method comprising:
displaying content on the display of an electronic device;
displaying an input of at least one of an image and text to the electronic device, the at least one of the image and the text being overlapped with at least a portion of the content; and
transmitting information representing the input along with information representing the content.

12. The method of claim 11, wherein the content includes at least one of a web page, digital document data, audio data, video data and image data.

13. The method of claim 11, wherein the information representing the input includes a markup language that represents the shape of graphic.

14. The method of claim 11, wherein the information representing the content includes a Hypertext Markup Language (HTML) document, the information representing the input includes SVG information, and
the information representing the input is included in the HTLM document.

15. The method of claim 11, further comprising:
receiving information representing content and object information representing at least one of an image and text to be displayed on the content;
displaying content on the display; and
displaying at least one of the image and the text on the display based on at least a portion of the object information, the at least one of the image and the text being overlapped with at least a portion of the content.
